# EUROPEAN PATENT APPLICATION

(11) **EP 4 199 180 A1**
(43) Date of publication of application: **21.06.2023**
(21) Application number: 21306799.4
(22) Date of filing: 16.12.2021
(51) Int. Cl.: H01M 10/48

(54) **METHOD FOR DETERMINING THE ELECTROLYTE LEVEL IN A BATTERY**

(71) Applicant: Saft Groupe, 92300 Levallois-Perret (FR)
(72) Inventor: NILSSON, Daniel, 11233 STOCKHOLM (SE)
(74) Representative: Hirsch & Associés

(57) **Abstract**

A method for determining an electrolyte level in electrochemical cells of a battery or of a plurality of batteries, said method comprising the steps of :
a) providing one battery or a plurality of batteries, each battery comprising a container having at least one wall; each battery consisting of one or several electrochemical cells;
b) recording an image of the infrared radiations emitted by the wall and by the electrolyte through the wall of the battery or in case of a plurality of batteries recording an image of the infrared radiations emitted by the walls and by the electrolyte through the walls of the plurality of batteries;
c) processing the image to locate in each electrochemical cell a boundary between two zones exhibiting a temperature difference thereby determining the electrolyte level in each electrochemical cell.

## Description

### TECHNICAL FIELD

The present disclosure relates to devices for monitoring the electrolyte level in the electrochemical cells of a battery or of a plurality of batteries. It relates more particularly to infrared-based monitoring devices for monitoring the electrolyte level in the electrochemical cells of a battery or of a plurality of batteries intended to be used in an uninterruptible power supply system.

### BACKGROUND ART

The electrolyte is an essential component of an electrochemical cell. It provides the ionic conductivity inside the electrochemical cell and has to be present in a sufficient amount. Otherwise, the internal resistance of the electrochemical cell increases and its capacity is reduced, especially when the top of the electrodes is no longer immersed in the electrolyte. The electrolyte in a lead-acid or in a nickel/cadmium electrochemical cell is a water-based electrolyte. The main reason for water loss in these types of electrochemical cells is electrolytic decomposition. Indeed, when the electrochemical cell containing a water-based electrolyte approaches its end of charge or is overcharged, water decomposes into hydrogen and oxygen gases. Hydrogen and oxygen then escape from the electrochemical cell. Besides, heat generated during charging contributes to the water loss through evaporation.

If the amount of electrolyte falls below a certain level, an operator has to open the electrochemical cell and to top up the electrochemical cell container with water. A battery very often consists of multiple separate but electrically connected electrochemical cell compartments each of which being designed to house an assembly of electrodes, separators, electrolyte, terminals and interconnections. Since each compartment contains its own electrolyte the operator must check for each compartment that the electrolyte amount contained in the compartment is sufficient. This is a tedious and time-consuming task because the operator has to check the electrolyte level in each cell. Water loss is thus a drawback of conventional lead-acid and nickel/cadmium batteries because maintenance at regular intervals is required for its compensation in order to avoid premature failure of the battery. Several techniques are known in the art to measure the electrolyte level in a battery.

For instance, a measurement of the battery internal resistance may be performed. This technique consists of passing a pulse of current either in charge or in discharge through the battery and measuring the change in voltage across the battery. The value of the internal resistance is the ratio of the change in voltage to the current. The internal resistance is then correlated with the amount of electrolyte in the battery. Such a method is disclosed in EP-A-1 206 809. Such a method requires connecting each tested battery to charge/discharge equipment. The operator who performs the test may be exposed to an electrical hazard. This solution is thus not completely satisfactory.

Another solution is based on optical measurements. WO 2019/089363 discloses an electrolyte monitoring system comprising an infrared (IR) sensor attached to the exterior wall surface of a battery cell. The sensor is positioned at a height corresponding to a predetermined minimum level of electrolyte. If the electrolyte level falls below this minimum level, the sensor generates an alarm informing an operator that a water top-up is required.

There are also sensors based on the detection of a different path of light depending on whether the light is directed at a surface of a wall in contact with the electrolyte or in contact with air. When the wall of the container is not in contact with electrolyte but is in contact with air, i.e. at a low electrolyte level, the light sent by an IR source is almost completely reflected by the wall. When the wall of the container is in contact with electrolyte, that is, when the electrolyte is at a satisfactory level, a first part of the light sent by the IR source is reflected by the wall and a second part is refracted by the electrolyte. The analysis of the intensity of the reflected light allows the electrolyte level to be determined. Such a technique is disclosed for instance in WO-A-2017/51204. This document describes two sensors combining an IR transmitter and IR receiver. The two sensors are attached to the outer wall of a battery container one above the other. The IR signals received by the two IR receivers are compared. When the electrolyte level falls and is located between the two sensors, the signal received by the IR receiver of one sensor differs from the signal received by the IR receiver of the other sensor, thus indicating that the electrolyte has reached a minimum allowed level. This solution has the disadvantage that sensors must be glued to the external wall of the container which may cause damage to it.

WO-A-2016/009773 discloses a monobloc battery comprising a container and a cover. The horizontal surface of the cover is equipped with an electrolyte level measuring unit which includes a light emitting unit and a light receiving unit. The light emitting unit emits a light towards the electrolyte surface. The light reflects on the electrolyte surface and is then captured by the light receiving unit. The amount of light reflected on the electrolyte surface varies depending on the distance between the measuring unit and the electrolyte level. By analyzing the reflected light, it is possible to determine the electrolyte level. This solution has the disadvantage that the cover must be drilled so as to place a transparent window. A transparent window is indeed required to let the light reach the electrolyte level and be reflected back to the light receiving unit.

JP 2003-247881 discloses a method for monitoring the electrolyte level in batteries placed on a conveyor in a quality control area of a production line. Each battery has a translucent container. An IR light source faces one external wall of a battery container and projects an IR light through the battery. An IR detector faces the opposite external wall of the container and receives the IR light passing through the battery. The conveyor moves the batteries one by one between the light source and the detector. An image processing device determines whether there is enough electrolyte or not. The drawback of this method is that a translucent container to let the IR light pass through the battery is required. Even if a translucent container is used, it may be necessary to glue a label on the container wall. This label would prevent the IR light from passing through the battery. A second drawback is that this method requires an infrared (IR) light source. A third drawback is that the method can only monitor the electrolyte level of one battery at a time, unless several IR light sources and several IR detectors are used, each IR light source and IR detector being associated with one battery. This is a costly solution.

Therefore, there is a need for a method allowing a continuous monitoring of the electrolyte level in the electrochemical cells of a battery or of a plurality of batteries at one and the same time. The term "at one and the same time" means that the electrolyte level should be determined at the same time for all the electrochemical cells of the battery or of the plurality of batteries.

There is also a need for a method allowing a continuous monitoring of the electrolyte level in each electrochemical cell of a battery or of the plurality of batteries, without having to mount sensor(s) either on the cover or onto the container of the battery or of the plurality of batteries.

Finally, there is also a need to provide a single device which alone can measure the electrolyte level in all the electrochemical cells of a battery or of a plurality of batteries and at one and the same time.

### SUMMARY OF THE INVENTION

To this end, a first object of the invention is a method for determining an electrolyte level in the electrochemical cells of a battery or of a plurality of batteries, said method comprising the steps of:
a) providing one battery or a plurality of batteries, each battery comprising a container having at least one wall; each battery consisting of one or several electrochemical cells;
b) recording an image of the infrared radiations emitted by the wall and by the electrolyte through the wall of the battery or, in case of a plurality of batteries, recording an image of the infrared radiations emitted by the walls and by the electrolyte through the walls of the plurality of batteries;
c) processing the image to locate in each electrochemical cell a boundary between two zones exhibiting a temperature difference thereby determining the electrolyte level in each electrochemical cell.

The method according to the invention can be implemented for monitoring the electrolyte level in the electrochemical cells of only one battery but also in the electrochemical cells of several batteries.

The invention takes advantage of the fact that a battery heats when it is charged or discharged and that the electrolyte and air have different thermal conductivities. The electrolyte acts as a heatsink during charge/discharge whereas air has a lower ability to conduct heat. Thus, the part of the container located above the electrolyte level, which is filled with air, is at a temperature which is lower than the part of the container filled with the electrolyte. Since these two parts exhibit different temperatures, they emit infrared radiations at a different wavelength. An infrared camera (also called thermal imaging camera) is used to take a picture of the wall of the battery container. The location of the boundary between the « cold » zone and the « hot » zone corresponds to the electrolyte level. The boundary can be located by digitally processing the image captured by the infrared camera.

In one embodiment, the temperature difference is at least five times or at least 10 times the camera thermal sensitivity used for recording the image.

In one embodiment, the image recorded in step b) encompasses the walls of at least 10 electrochemical cells, preferably the walls of at least 15 electrochemical cells.

In one embodiment, said at least one wall is made of a plastic material or made of glass.

In one embodiment, the battery or the plurality of batteries undergoes a discharge or a charge.

In one embodiment, the method comprises an additional step d) consisting of comparing the electrolyte level of each electrochemical cell with a predetermined reference level and triggering an alarm if one electrolyte level is below the predetermined reference level.

In one embodiment, the method is devoid of any infrared radiation emitting device sending an infrared beam through an electrochemical cell.

In one embodiment, the method, further comprises a step of measuring the temperature of the electrochemical cell(s) of a battery and triggering an alarm if the temperature exceeds a predetermined limit.

In one embodiment, the electrochemical cells of the battery or the electrochemical cells of the plurality of batteries contain an aqueous electrolyte.

In one embodiment, the electrochemical cells of the battery or the electrochemical cells of the plurality of batteries contain an alkaline electrolyte.

A second object of the invention is a method for monitoring an electrolyte level in electrochemical cells of a battery or of a plurality of batteries, said method comprising :
- carrying out steps a)-c) of the method as described above, optionally step d), and
- repeating steps b) and c) periodically or at predetermined time intervals.

A third object of the invention is a set-up that can be used to implement the first method or the second method of the invention. The invention thus provides a set-up for determining or for monitoring the electrolyte level in electrochemical cells of a battery or of a plurality of batteries, said set-up comprising:
- an infrared camera;
- one or several batteries; each battery consisting of one or several electrochemical cells;
the set-up being devoid of any infrared radiation emitting device capable of sending an infrared beam through an electrochemical cell. The batteries used in this set-up can be as described in relation with the two above methods.

According to one embodiment, the set-up comprises only one infrared camera and at least 10 electrochemical cells.

A fourth object according to the invention is a computer-implemented method for determining an electrolyte level in electrochemical cells of a battery or of a plurality of batteries, said method comprising:
- receiving a stream of numerical data generated by an infrared camera placed at a distance from a wall of a battery or from the walls of a plurality of batteries; each battery consisting of one or several electrochemical cells;
- calculating a difference between two numerical data;
- determining the location of the electrolyte level in an electrochemical cell by detecting when the difference between the two numerical data exceeds a predetermined threshold value Vs.

According to one embodiment, the stream of numerical data represents an image acquired by the infrared camera of a wall of the battery or of the walls of the plurality of batteries.

A fifth object according to the invention is a data processing apparatus comprising means for carrying out the computer-implemented method which is the fourth object according to the invention.

A sixth object according to the invention is a computer program product comprising instructions which, when the program is executed by a computer cause the computer to carry out the computer-implemented method which is the fourth object according to the invention.

A seventh object according to the invention is a computer-readable medium having stored thereon the computer program product which is the sixth object according to the invention.

Embodiments of the invention are described below in more details with reference to the attached drawings.

### BRIEF DESCRIPTION OF THE DRAWINGS

FIG.1 is a flowchart of the different steps involved in the method according to the invention.
FIG. 2 represents schematically the image of the IR radiations emitted by a monobloc battery comprising six electrochemical cells and which is recorded by an IR camera.

### DETAILED DESCRIPTION OF EMBODIMENTS

### Description of a practical implementation:

The set-up used for implementing the method of the invention comprises :
- one or several batteries;
- an infrared camera.

The batteries can be of the same technology or can be of different technologies. They can be of the same size (length, width and height) or of different sizes. Preferably, the batteries are of the same technology and have the same size. The battery container preferably has a parallelepiped shape. The container can be made of a plastic material but it can also be made of glass. The plastic material can be of any type. Polyolefins, such as polyethylene and polypropylene, are preferred. Containers made of metallic materials are not suitable. The walls of the container do not need to be transparent or translucent. One advantage of the method according to the invention is that batteries having opaque walls may be used. The method according to the invention thus provides an advantage over a method involving the use of a camera operating only in the visible range, such a method requiring that a translucent or transparent container be used.

The battery is generally a monobloc battery, that is, a battery with multiple separate but electrically connected electrochemical cell compartments each of which being designed to house an assembly of electrodes, electrolyte, terminals or interconnections and possibly separators. The electrochemical cells in the monobloc battery can be connected in series or in parallel. The container of a monobloc battery is a parallelepiped container comprising divider walls, each divider wall separating two adjacent electrochemical cells. The method allows monitoring of the electrolyte level in each electrochemical cell.

The battery can be of any technology. It can be a vented battery or a valve-regulated battery. Batteries having an alkaline-based electrolyte, such as Ni/Cd, Ni/MH, Ni-Zn and Ni-Fe batteries, are preferred. Lead-acid batteries and Zn-ion batteries may also be envisioned. The battery may be used in stationary installations, that is, as a power back-up in case of a power outage. The battery can be part of an uninterruptible power system (UPS). The method is advantageously applied for monitoring the electrolyte level in electrochemical cells of a stationary pocket plate Ni-Cd battery.

The camera used in the present invention is an infrared camera. It is typically sensitive to wavelengths from about 1 µm to about 14 µm. It captures the infrared radiations emitted by the battery container and converts them into numerical data. Any point on the surface of the battery container emits an infrared radiation the wavelength of which is dependent on its temperature. The camera relates the wavelength to a numerical data. A relationship thus exists between the temperature of the battery container and the numerical data generated by the camera. The set of numerical data constitutes an image which can be displayed on the camera screen or on a separate display.

One advantage of the present invention is that only one camera can monitor the electrolyte level in several electrochemical cells at one and the same time, for example at least 5 or at least 10 or at least 15 or at least 20 electrochemical cells at one and the same time. This is an advantage over commonly used solutions requiring one sensor per electrochemical cell, for example one IR sensor per electrochemical cell. The number of electrochemical cells that one camera is able to monitor depends on the camera field of view. A wide field of view allows monitoring a high number of electrochemical cells with only one camera. The same number of electrochemical cells may be monitored using a camera having a narrower field of view but the narrower field of view has to be compensated by the addition of one or more additional cameras.

Another advantage is that it is not necessary to mount an IR emitter/receiver onto the container wall of the battery. The camera may be left at a certain distance from the battery or batteries to be monitored. This distance varies depending on the camera resolution. The higher the resolution the farther away from the battery or batteries it is possible to place the camera. The camera may be placed at a distance from the battery or batteries ranging from 50 cm to a few meters.

The camera may be able to detect very small temperature variations. The ability of a camera to detect small temperature variations depends on its sensitivity. Sensitivity values as low as 0.05°C at 30°C may be reached. A low sensitivity value is sought when a low temperature rise is to be detected. This situation occurs when small currents flow through the battery, for example for a current less than or equal to C/5 or less than or equal to C/10 or less than or equal to C/20 or less than or equal to C/50. The method of the invention is not suitable for monitoring the electrolyte level when the battery has been left at rest for a period of time long enough to allow the electrolyte to cool down or if the battery is charged under floating conditions, that is, when it is permanently connected to a source of constant voltage or constant current sufficient to maintain the battery fully charged.

Examples of infrared cameras suitable for carrying out the method include FLIR A35 45°, FLIR A65 45° and FLIR AX8 commercialized by Teledyne FLIR.

### Description of the method for determining an electrolyte level in the electrochemical cells of a battery or of a plurality of batteries:

The method of the invention may be used to monitor the electrolyte level in electrochemical cells of batteries which are manufactured on a production line or which are stored in a room dedicated to the battery storage. In both situations, the monitoring is performed after the battery has been at least partially charged or discharged in order to sufficiently heat the electrolyte.

The method of the invention may comprise the following steps :
a) providing one battery or a plurality of batteries, each battery comprising a container having at least one wall; each battery consisting of one or several electrochemical cells. The batteries may be aligned on the belt of a conveyor of a production line or may have been aligned by an operator in a storage room.
b) pointing one or several IR cameras towards one wall of each battery of the plurality of batteries. Generally, the camera(s) aim(s) in a direction which is perpendicular to the direction of alignment of the batteries. The camera(s) must be securely mounted to a fixed support so as to avoid any vertical movement of the camera that could distort the measurement.
c) choosing the location of the minimum allowed electrolyte level. This step of locating the minimum allowed electrolyte level also called "calibration" can be done from the knowledge of the electrochemical cell dimensions (height, width and depth) and the knowledge of electrode height. For example, the minimum allowed electrolyte level may correspond to the level where the upper edge of the electrodes is no longer immersed in the electrolyte.
d) capturing the infrared radiations emitted by the plurality of batteries;
e) calculating the location of the boundary between the « hot » zone and the « cold » zone;
f) comparing the location of the boundary of step e) with the minimum allowed electrolyte level chosen in step c). If the location is above, then it is concluded that there is enough electrolyte in the battery otherwise a warning signal is sent to an operator who proceeds with a water top-up.

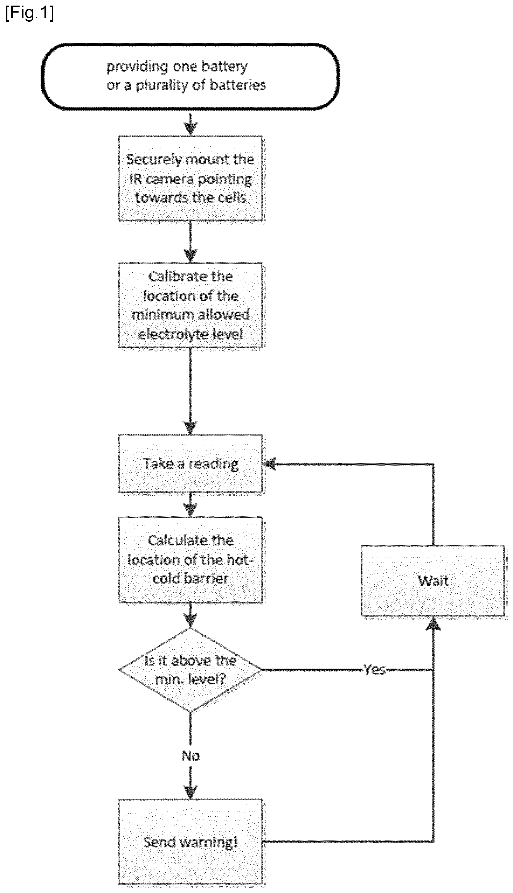

The sequence of these different steps is indicated in the flowchart of FIG. 1.

In addition to monitoring the electrolyte level, the process may also provide an indication of the temperature of each battery, or an indication of the temperature of each electrochemical cell in a battery and send a warning signal to an operator if one temperature exceeds a predetermined limit. The use of only one IR camera can indicate both the electrolyte level and the battery temperature whereas conventional solutions require a first device for measuring the temperature and a second device for measuring the electrolyte level.

The IR radiations captured by the camera are converted into numerical data, each numerical data relating to a particular wavelength. The set of numerical data constitutes an image. The set of numerical data may be processed by a software integrated in the camera itself in order to determine the boundary between the" cold" zone and the "hot" zone. The set of numerical data can also be transferred from the camera to a computer which will perform data processing.

### Example

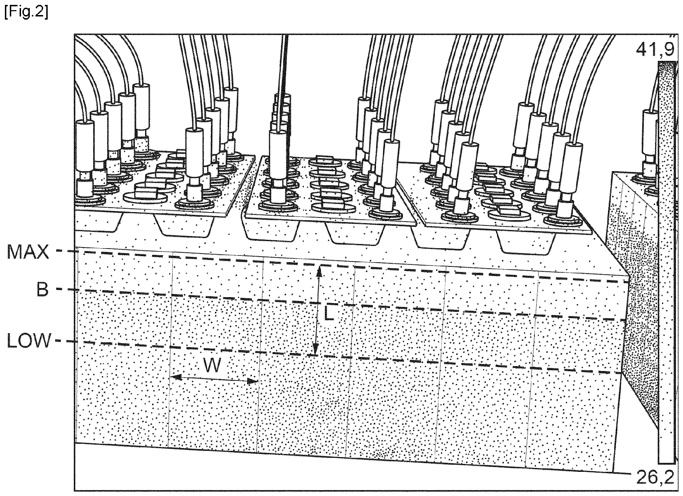

A stationary pocket plate Ni-Cd monobloc battery comprising 6 electrochemical cells and having a rated capacity of 280Ah has been placed in the field of view of a FLIR A35 45° camera. It had been charged beforehand by a current of C/5. The monobloc container was made of polypropylene. One image of the infrared radiations emitted by the battery has been recorded by the camera and is reproduced on FIG. 2. The lower part of the container in contact with the KOH electrolyte is the "hot" zone and corresponds to a zone having a high density of dots whereas the upper part of the container in contact with air is the "cold" zone and corresponds to a zone having a lower density of dots. The boundary between the "cold" and the "hot" zones is indicated by the dashed line "B" and corresponds to the electrolyte level at the time the picture was taken. The minimum electrolyte level is shown by the dashed line "LOW'. The height "L" corresponds to the electrolyte height when the battery is fully filled with electrolyte. The dark vertical lines represent the intercell partitions. The width "W" corresponds to the distance between two intercell partitions. Since the dimensions of the electrochemical cell partitions are known and that the camera allows the determination of the electrolyte level it is possible to determine at any time how much electrolyte has been consumed and to know if electrolyte is missing. If the boundary "B" passes below the minimum electrolyte level "LOW', a software sends a warning signal. Further, the camera is able to convert the IR radiation wavelength into a temperature. The vertical axis on the right part of the FIG. 2 shows the correspondence between the brightness of the colour and the temperature. Temperatures range in this specific example from 26 and 42°C. The invention allows detecting any hot spot and warns an operator if one temperature value exceeds a predetermined limit.

## Claims

1. A method for determining an electrolyte level in electrochemical cells of a battery or of a plurality of batteries, said method comprising the steps of:
a) providing one battery or a plurality of batteries, each battery comprising a container having at least one wall; each battery consisting of one or several electrochemical cells;
b) recording an image of the infrared radiations emitted by the wall and by the electrolyte through the wall of the battery or in case of a plurality of batteries recording an image of the infrared radiations emitted by the walls and by the electrolyte through the walls of the plurality of batteries;
c) processing the image to locate in each electrochemical cell a boundary between two zones exhibiting a temperature difference thereby determining the electrolyte level in each electrochemical cell.

2. The method according to claim 1, wherein the temperature difference is at least five times or at least 10 times the camera thermal sensitivity used for recording the image.

3. The method according to any of claims 1 and 2, wherein the image recorded in step b) encompasses the walls of at least 10 electrochemical cells, preferably the walls of at least 15 electrochemical cells.

4. The method according to any of claims 1 to 3, wherein said at least one wall is made of a plastic material or made of glass.

5. The method according to any of claims 1 to 4, wherein the battery or the plurality of batteries undergoes a discharge or a charge.

6. The method according to any of claims 1 to 5, comprising an additional step d) consisting of comparing the electrolyte level of each electrochemical cell with a predetermined reference level and triggering an alarm if one electrolyte level is below the predetermined reference level.

7. The method according to any of claims 1 to 6 which is devoid of any infrared radiation emitting device sending an infrared beam through an electrochemical cell.

8. The method according to any of the preceding claims, further comprising a step of measuring the temperature of the electrochemical cell(s) of a battery and triggering an alarm if the temperature exceeds a predetermined limit.

9. The method according to any of the preceding claims, wherein the electrochemical cells of the battery or the electrochemical cells of the plurality of batteries contain an aqueous electrolyte.

10. The method according to any of the preceding claims, wherein the electrochemical cells of the battery or the electrochemical cells of the plurality of batteries contain an alkaline electrolyte.

11. A method for monitoring an electrolyte level in electrochemical cells of a battery or of a plurality of batteries, said method comprising :
- carrying out steps a)-c) of the method of any of claims 1 to 10 and
- repeating steps b) and c) periodically or at predetermined time intervals.

12. A set-up for monitoring the electrolyte level in electrochemical cells of a battery or of a plurality of batteries, said set-up comprising:
- an infrared camera;
- one or several batteries; each battery consisting of one or several electrochemical cells; the set-up being devoid of any infrared radiation emitting device capable of sending an infrared beam through an electrochemical cell.

13. The set up according to claim 12, comprising only one infrared camera and at least 10 electrochemical cells.

14. A computer-implemented method for determining an electrolyte level in electrochemical cells of a battery or of a plurality of batteries, said method comprising:
- receiving a stream of numerical data generated by an infrared camera placed at a distance from a wall of a battery or from the walls of a plurality of batteries; each battery consisting of one or several electrochemical cells;
- calculating a difference between two numerical data;
- determining the location of the electrolyte level in an electrochemical cell by detecting when the difference between the two numerical data exceeds a predetermined threshold value Vs.

15. The computer-implemented method according to claim 14, wherein the stream of numerical data represents an image acquired by the infrared camera of a wall of the battery or of the walls of the plurality of batteries.

16. A data processing apparatus comprising means for carrying out the computer-implemented method of claim 14 or 15.

17. A computer program product comprising instructions which, when the program is executed by a computer cause the computer to carry out the computer-implemented method of claim 14.

18. A computer-readable medium having stored thereon the computer program product of claim 17.
